(19) Europäisches Patentamt
European Patent Office
Office européen des brevets

(11) EP 4 112 331 B1

(12) EUROPEAN PATENT SPECIFICATION

(45) Date of publication and mention of the grant of the patent:
**04.09.2024 Bulletin 2024/36**

(21) Application number: **22173541.8**

(22) Date of filing: **16.05.2022**

(51) International Patent Classification (IPC):
***B60C 1/00*** *(2006.01)* ***B60C 11/00*** *(2006.01)*
***C08L 17/00*** *(2006.01)* ***C08L 19/00*** *(2006.01)*
***B60C 13/00*** *(2006.01)*

(52) Cooperative Patent Classification (CPC):
**B60C 1/0016; B60C 11/005; C08L 9/00; C08L 17/00; C08L 19/003; C08L 21/00;**
B60C 2011/0025; B60C 2013/007; Y02T 10/86

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2021 JP 2021108408**

(43) Date of publication of application:
**04.01.2023 Bulletin 2023/01**

(73) Proprietor: **Sumitomo Rubber Industries, Ltd.**
**Kobe-shi, Hyogo-ken 651-0072 (JP)**

(72) Inventor: **TOMITA, Kota**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**JP-B1- 6 881 627** **US-A1- 2016 152 805**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

Field of the Invention

The present invention relates to a pneumatic tire, and more specifically relates to a pneumatic tire having excellent ride comfort even after a tread rubber becomes hardened.

Background Art

After a pneumatic tire (hereinafter, also simply referred to as "tire") is mounted on an automobile, hardening of a rubber used in the tire proceeds as the years of use of the tire increase. If hardening of a tread rubber has proceeded, a feeling of pushing up is significantly felt, for example, when the vehicle runs over a step.
Therefore, various improvements have been made for pneumatic tires to have excellent ride comfort and to have a reduced feeling of pushing up, for example, when a vehicle runs over a step (for example, Japanese Laid-Open Patent Publication No. 2014-113957, Japanese Laid-Open Patent Publication No. 2019-116197).
US 2016/152805 A1 discloses a rubber formulation made with a chemically functionalized renewed rubber.
JP 6 881627 B1 discloses a tire containing a modified rubber crumb, having a sidewall made of a rubber composition having an elongation at break at 23 °C of 500% or more, and satisfying the formula cross-section height/cross-section width x 100 $\geq$ 50%.
However, with the above-described conventional technology, a feeling of pushing up, for example, when a vehicle runs over a step still cannot be considered to be sufficiently reduced in a tire whose years of use have increased, so that a pneumatic tire having excellent ride comfort even after a tread rubber becomes hardened due to the increased years of use thereof is desired.
Therefore, an object of the present invention is to provide a pneumatic tire having a sufficiently reduced feeling of pushing up, for example, when a vehicle runs over a step even after a tread rubber becomes hardened due to the increased years of use thereof, and having sufficiently improved ride comfort.

SUMMARY OF THE INVENTION

The present inventor has conducted an intensive study to solve the above problem, has found that the problem can be solved by the invention described below, and has completed the present invention.
A first aspect of the present invention is directed to a pneumatic tire, as defined in claim 1, including a tread portion and sidewall portions, wherein

an outermost layer of the tread portion is formed by using a rubber composition, which contains vulcanized rubber powder and has a loss tangent (0°C tan$\delta$) of less than 0.23 as measured under conditions of 0°C, a frequency of 10 Hz, an initial strain of 5%, and a dynamic strain rate of 1% with deformation mode: tension, such that an area ratio Sr (%) of the vulcanized rubber powder in a cross-section of the outermost layer of the tread portion is not less than 5% and not greater than 50%,
each sidewall portion is formed such that a thickness G (mm) thereof is not less than 1.0 mm, and
the following formula 1 is satisfied,

$$Sr/G > 0.5 \quad \text{(formula 1)},$$

and wherein

the rubber component of the rubber composition forming the outermost layer of the tread portion contains natural rubber,
the rubber component of the rubber composition forming the sidewall portions contains natural rubber, and
an amount of the natural rubber contained in 100 parts by mass of the rubber component in the rubber composition forming the sidewall portions is larger than an amount of the natural rubber contained in 100 parts by mass of the rubber component in the rubber composition forming the outermost layer of the tread portion.

In accordance with a second aspect of the present invention, in the pneumatic tire according to the first aspect, the 0°C tan$\delta$ is less than 0.21.

In accordance with a third aspect of the present invention, in the pneumatic tire according to the first or second aspect,
the area ratio Sr (%) of the vulcanized rubber powder in the cross-section of the outermost layer of the tread portion is greater than 10% and less than 50%.

In accordance with a fourth aspect of the present invention, in the pneumatic tire according to the third aspect, the area ratio Sr (%) of the vulcanized rubber powder in the cross-section of the outermost layer of the tread portion is greater than 15% and less than 30%.

In accordance with a fifth aspect of the present invention, in the pneumatic tire according to any one of the first to fourth aspects,
the following formula 2 is satisfied,

$$Sr/G \geq 0.7 \quad \text{(formula 2)}.$$

In accordance with a sixth aspect of the present invention, in the pneumatic tire according to the fifth aspect, the following formula 3 is satisfied,

$$Sr/G \geq 0.9 \quad \text{(formula 3)}.$$

In accordance with a seventh aspect of the present invention, in the pneumatic tire according to any one of the first to sixth aspects,
the rubber composition forming the outermost layer of the tread portion and the vulcanized rubber powder contain silica.

In accordance with an eighth aspect of the present invention, in the pneumatic tire according to any one of the first to seventh aspects,

a rubber component of the rubber composition forming the outermost layer of the tread portion contains butadiene rubber,
a rubber component of a rubber composition forming the sidewall portions contains butadiene rubber, and
an amount of the butadiene rubber contained in 100 parts by mass of the rubber component in the rubber composition forming the sidewall portions is larger than an amount of the butadiene rubber contained in 100 parts by mass of the rubber component in the rubber composition forming the outermost layer of the tread portion.

In accordance with a ninth aspect of the present invention, in the pneumatic tire according to any one of the first to ninth aspects,

the tread portion is composed of two or more rubber layers, and
a blending formula of a rubber composition forming a cap rubber layer which is the outermost layer is different from that of a rubber composition forming the other rubber layer(s) including a base rubber layer which is an innermost layer.

In accordance with a tenth aspect of the present invention, in the pneumatic tire according to the tenth aspect, the rubber layer(s) other than the cap rubber layer contain the vulcanized rubber powder.

In accordance with a eleventh aspect of the present invention, in the pneumatic tire according to the eleventh aspect,

an area ratio Sout (%) of the vulcanized rubber powder in the cap rubber layer is higher than an area ratio Sin (%) of the vulcanized rubber powder in the base rubber layer, and
the area ratio Sin (%) of the vulcanized rubber powder in the base rubber layer is greater than 1%.

In accordance with a twelfth aspect of the present invention, in the pneumatic tire according to any one of the first to twelfth aspects,
the vulcanized rubber powder is vulcanized rubber powder having a particle size finer than 30 mesh pass obtained through a test sieve specified in JIS Z8801-1.

According to the present invention, it is possible to provide a pneumatic tire having a sufficiently reduced feeling of pushing up, for example, when a vehicle runs over a step even after a tread rubber becomes hardened due to the increased years of use thereof, and having sufficiently improved ride comfort.

DETAILED DESCRIPTION

[1] Characteristics of Tire According to Present Invention

First, the characteristics of the tire according to the present invention will be described.

1. Outline

The tire according to the present invention is a pneumatic tire including a tread portion and sidewall portions, wherein an outermost layer of the tread portion is formed by using a rubber composition, which contains vulcanized rubber powder produced by crushing a vulcanized rubber and has a loss tangent (0°C tanδ) of less than 0.23 as measured under conditions of 0°C, a frequency of 10 Hz, an initial strain of 5%, and a dynamic strain rate of 1% with deformation mode: tension, such that an area ratio Sr (%) of the vulcanized rubber powder in a cross-section of the outermost layer of the tread portion is not less than 5% and not greater than 50%, each sidewall portion is formed such that a thickness G (mm) thereof is not less than 1.0 mm, and the following formula 1 is satisfied.

$$Sr/G > 0.5 \quad \text{(formula 1)}$$

By having these characteristics, as described later, it is possible to provide a pneumatic tire having a sufficiently reduced feeling of pushing up, for example, when a vehicle runs over a step even after a tread rubber becomes hardened due to the increased years of use thereof, and having sufficiently improved ride comfort.

2. Mechanism for Exhibiting Advantageous Effects in Tire According to Present Invention

The mechanism for exhibiting advantageous effects in the tire according to the present invention is inferred as follows.

As described above, in the tire according to the present invention, the outermost layer of the tread portion is formed by using the rubber composition containing vulcanized rubber powder produced by crushing the vulcanized rubber, such that the area ratio Sr (%) of the vulcanized rubber powder in the cross-section of the outermost layer of the tread portion is not less than 5% and not greater than 50%.

Since the vulcanized rubber powder can function as a cushioning material, by containing the vulcanized rubber powder in the rubber composition, the push-up cushioning performance that is exhibited by a rubber matrix layer in the conventional tread portion can also be distributed and exhibited by the vulcanized rubber powder. The vulcanized rubber powder is less likely to deteriorate than the other blending materials of the rubber composition, so that it is possible to suppress hardening of the tread rubber even if the years of use increase, and sufficiently reduce a feeling of pushing up.

By setting the area ratio Sr (%) of the vulcanized rubber powder in the cross-section of the outermost layer of the tread portion so as to be not less than 5% and not greater than 50% as described above, it is possible to efficiently exhibit the effect as a cushioning material and sufficiently reduce a feeling of pushing up.

The above-described area ratio Sr of the vulcanized rubber powder in the cross-section can be obtained, for example, by imaging a sample obtained by cutting such that a surface parallel to a tread surface becomes an observation cross-section with a scanning electron microscope, obtaining the area of a domain occupied by the vulcanized rubber powder, and obtaining the ratio of this area to the area or the entire cross-section. The area ratio Sr is preferably greater than 10% and more preferably greater than 15%. On the other hand, as the upper limit, the area ratio Sr is preferably less than 50%, more preferably less than 45%, and further preferably less than 30%.

The rubber composition has a loss tangent (0°C tanδ) of less than 0.23 as measured under conditions of 0°C, a frequency of 10 Hz, an initial strain of 5%, and a dynamic strain rate of 1% with deformation mode: tension.

Since the loss tangent tanδ indicates the heat generation properties of rubber, it is considered that the larger this value is, the more easily heat is generated during rolling, and thermal deterioration of the entire rubber matrix is likely to be promoted.

Therefore, in the present invention, as described above, the vulcanized rubber powder is contained in the rubber composition to cause the push-up cushioning performance to also be distributed and exhibited by the vulcanized rubber powder, and to make it easier to suppress deterioration of the entire rubber matrix, whereby sufficient cushioning performance is achieved.

The loss tangent (tanδ) can be measured, for example, by using a viscoelasticity measurement device such as "EPLEXOR (registered trademark)" manufactured by NETZSCH-Gerätebau GmbH. The 0°C tanδ is more preferably less than 0.21 and further preferably less than 0.20. The lower limit of the 0°C tanδ is not particularly specified, but the 0°C tanδ is preferably not less than 0.05. It is considered that by setting the 0°C tanδ so as to be not less than 0.05, an

impact can be easily mitigated even in the rubber matrix.

In the present invention, each sidewall portion is formed such that the thickness G (mm) thereof is not less than 1.0 mm and the ratio (Sr/G) of the above area ratio Sr to the thickness G (mm) is greater than 0.5.

By setting each sidewall portion so as to have such a thickness, occurrence of bending at the sidewall portion is suppressed during rolling, and the tread portion is easily brought into pressure contact with the ground. As a result, an impact can be easily mitigated in the tread portion, and more of the cushioning performance that is exhibited by both the tread portion and each sidewall portion in the conventional tire can be exhibited by the tread portion. The ratio Sr/G is more preferably not less than 0.7 and further preferably not less than 0.9. The upper limit of the ratio Sr/G is not particularly specified, but the ratio Sr/G is preferably not greater than 1.5.

As used herein, the thickness of the sidewall portion is the thickness of a member forming the outer surface of the sidewall portion at a position at which a tire cross-sectional width in a normal state where the tire is fitted to a normal rim and inflated to a normal internal pressure is given. As used herein, the cross-sectional width and the thickness of the sidewall portion are those obtained by excluding the unevenness caused by characters and lettering provided on the surface of the sidewall portion, and a rim guard.

Here, the "normal rim" is a rim that is defined, in a standard system including a standard on which the tire is based, by the standard for each tire, and refers to, for example, the standard rim at an applicable size described in "JATMA YEAR BOOK" in the JATMA standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. In the case of a tire that is not specified in any standard, the "normal rim" refers to the rim having the smallest rim diameter, and, next to this, refers to the rim having the smallest rim width, among rims to which the tire can be fitted and which allow the internal pressure of the tire to be maintained, that is, rims that do not cause air leakage from between the rim and the tire.

The "normal internal pressure" is an air pressure that is defined by the standard for each tire, and refers to the maximum air pressure in the above JATMA standard, the maximum value indicated in the table "TIRE LOAD LIMITS AT VARIOUS COLD INFLATION PRESSURES" in the TRA standard, or the "INFLATION PRESSURE" in the ETRTO standard.

Since the tread portion contains the vulcanized rubber powder having a cushioning action as described above, the tread portion can have a sufficient cushioning function. The upper limit of the thickness G (mm) of the sidewall portion is not particularly specified, but the thickness G (mm) is preferably not greater than 10 mm.

As described above, in the present invention, since the balance between the configuration of the rubber composition forming the outermost layer of the tread portion and the thickness of the sidewall portion is appropriately set, it is possible to sufficiently reduce a feeling of pushing up, for example, when a vehicle runs over a step, even after the tread rubber becomes hardened due to the increased years of use, and sufficiently improve the ride comfort.

[2] More Preferable Mode of Tire According to Present Invention

The tire according to the present invention can achieve a greater effect by taking the following mode.

1. Containing Silica

In the tire according to the present invention, both the rubber composition and the vulcanized rubber powder preferably contain silica.

It is considered that by containing silica in the rubber composition, a rubber component which is a polymer can be reinforced without excessively increasing the heat generation properties. In addition, at the same time, by also containing silica in the vulcanized rubber powder, the heat generation properties by the vulcanized rubber powder itself are decreased, and the vulcanized rubber powder is easily dispersed in the rubber composition containing silica, so that it is considered that by uniformly dispersing the vulcanized rubber powder, the impact received from the rubber surface can be easily cushioned by the vulcanized rubber powder.

2. Containing Butadiene Rubber (BR) in Rubber Composition

In a tire, natural rubber (NR) and diene-based rubbers such as butadiene rubber (BR) and styrene-butadiene rubber (SBR) are generally used as a rubber component.

Among these rubber components, BR has low heat generation properties, but has high rebound resilience. Therefore, by setting the amount of BR contained in 100 parts by mass of the rubber component in a rubber composition forming the sidewall portions to be larger than the amount of BR contained in 100 parts by mass of the rubber component in the rubber composition forming the outermost layer of the tread portion, rebound is less likely to be caused in the tread portion, and it is possible to further cause rebound in the sidewall portion with respect to the rebound caused in

the tread portion, so that it is considered that it is possible to make it easier to bring the tread portion into pressure contact with a road surface, and it is possible to make it more difficult to transmit a feeling of pushing up.

3. Containing Natural Rubber (NR) in Rubber Composition

Natural rubber (NR) can exhibit high tensile strength and improve the durability of the tire. However, on the other hand, since natural rubber (NR) has extended crystallinity, an impact force such as pushing up cannot be received, and tends to be propagated as it is, which may decrease the cushioning performance.
Therefore, in the present invention, the amount of NR contained in 100 parts by mass of the rubber component in the rubber composition forming the sidewall portions is larger than the amount of NR contained in 100 parts by mass of the rubber component in the rubber composition forming the outermost layer of the tread portion.
By setting the proportion of NR in the rubber composition forming the outermost layer of the tread portion so as to be lower and setting the proportion of NR in the rubber composition forming the sidewall portions so as to be higher as described above, the role of push-up cushioning can be allotted to the tread portion, and the tread portion can sufficiently exhibit cushioning performance, similar to the above-described case of BR.

4. Making Tread Portion to Be Multilayered

In the present invention, the tread portion is not limited to a single-layer tread portion formed by using the above-described rubber composition, and may be composed of two or more rubber layers having different blending formulas. In this case, the above-described rubber composition is used for a cap rubber layer which is the outermost layer.
In the case where rubber layers having different blending formulas are arranged to form a tread portion, cushioning performance can be exhibited more efficiently, so that such a tread portion is preferable.
However, in the case where the rubber composition contains the vulcanized rubber powder, the reinforcing properties may decrease, which may lead to a decrease in the durability of the tire. Therefore, preferably, an area ratio Sin (%) of the vulcanized rubber powder in an inner rubber layer, that is, a base rubber layer, is made lower than an area ratio Sout (%) of the vulcanized rubber powder in the cap rubber layer to satisfy a relationship of Sout (%) > Sin (%). The area ratio Sin (%) is preferably greater than 1%.
Accordingly, the durability that cannot be sufficiently achieved by the cap rubber layer can be ensured in the inner rubber layer (base rubber layer), so that sufficient cushioning performance can be exhibited while maintaining sufficient durability. In order to sufficiently exert the function of the vulcanized rubber powder as a cushioning material, the area ratio Sin (%) of the vulcanized rubber powder in the inner rubber layer is preferably greater than 1%.

5. Particle Size of Vulcanized Rubber Powder

In the present invention, the vulcanized rubber powder preferably has a particle size finer than 30 mesh pass and coarser than 250 mesh pass obtained through a test sieve specified in JIS Z8801-1. By making the particle size finer than 30 mesh pass, it becomes easier to achieve uniform dispersion in the rubber composition, and it is possible to easily achieve sufficient durability in the rubber composition. On the other hand, by making the particle size coarser than 250 mesh pass, a domain of the vulcanized rubber powder can be formed in the rubber composition so as to have a sufficient size, so that it is considered that it becomes easier to cushion an impact, and it is possible to easily improve the noise performance.

[3] Embodiment

Hereinafter, the present invention will be specifically described based on an embodiment.

1. Rubber Composition

(1) Blending Materials

In the present invention, the rubber composition forming the outermost layer of the tread portion and the rubber composition forming the sidewall portions can each be obtained from a rubber component and other blending materials described below.

(a) Rubber Component

In the present embodiment, the rubber component is not particularly limited, and rubbers (polymers) generally

used in the production of tires, such as isoprene-based rubbers, diene-based rubbers such as butadiene rubber (BR), styrene-butadiene rubber (SBR), and nitrile rubber (NBR), and butyl-based rubbers such as isobutylene-isoprene-rubber, can be used. Among them, isoprene-based rubbers, BR, and SBR are preferably used. In addition, these polymers may be used individually, or two or more of these polymers may be used in combination. In particular, in the rubber composition forming the outermost layer of the tread portion, from the viewpoint of forming a phase-separation structure in the system and making it easier to absorb an impact even in the phases thereof, NR and BR, or NR and SBR are preferably used in combination, and three types of NR, SBR, and BR are more preferably used.

(I) Isoprene-Based Rubber

The amount (total amount) of the isoprene-based rubber in 100 parts by mass of the rubber component in the rubber composition forming the outermost layer of the tread portion is preferably not less than 25 parts by mass, more preferably not less than 35 parts by mass, and further preferably not less than 40 parts by mass. The upper limit thereof is not particularly limited, but the amount (total amount) of the isoprene-based rubber is preferably not greater than 75 parts by mass, more preferably not greater than 70 parts by mass, and further preferably not greater than 60 parts by mass.

The amount (total amount) of the isoprene-based rubber in 100 parts by mass of the rubber component in the rubber composition forming the sidewall portions is preferably not less than 30 parts by mass, more preferably not less than 40 parts by mass, and further preferably not less than 45 parts by mass. The upper limit thereof is not particularly limited, but the amount (total amount) of the isoprene-based rubber is preferably not greater than 75 parts by mass, more preferably not greater than 70 parts by mass, and further preferably not greater than 60 parts by mass.

Examples of the isoprene-based rubber include natural rubber (NR), isoprene rubber (IR), reformed NR, modified NR, and modified IR, and NR is preferable since NR has excellent strength.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

(II) BR

In the present embodiment, as the rubber component, BR may be used together with NR as necessary. The amount of the BR in 100 parts by mass of the rubber component in the rubber composition forming the outermost layer of the tread portion is preferably not less than 30 parts by mass, more preferably not less than 40 parts by mass, and further preferably not less than 50 parts by mass. The upper limit thereof is not particularly limited, but the amount of the BR is preferably not greater than 70 parts by mass and more preferably not greater than 60 parts by mass.

The amount of the BR in 100 parts by mass of the rubber component in the rubber composition forming the sidewall portions is preferably not less than 40 parts by mass, more preferably not less than 50 parts by mass, and further preferably not less than 60 parts by mass. The upper limit thereof is not particularly limited, but the amount of the BR is preferably not greater than 80 parts by mass and more preferably not greater than 75 parts by mass.

The weight-average molecular weight of the BR is, for example, greater than 100 thousand and less than 2 million. The vinyl bond content (1,2-bond butadiene unit content) of the BR is, for example, greater than 1% by mass and less than 30% by mass. The cis content of the BR is, for example, greater than 1% by mass and not greater than 98% by mass. The trans content of the BR is, for example, greater than 1% by mass and less than 60% by mass. The cis content can be measured by infrared absorption spectrometry.

The BR is not particularly limited, and a BR having a high cis content (a cis content of 90% or higher), a BR having a low cis content, a BR containing syndiotactic polybutadiene crystals, etc., can be used. The BR may be either an unmodified BR or a modified BR, and, for example, an S-modified BR modified with a compound (modifier) represented by the following formula can be used as the modified BR.

[Chem. 1]

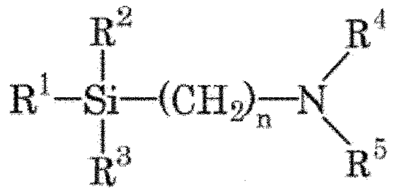

In the formula, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

An example of the modified BR modified with the compound (modifier) represented by the above formula is a BR obtained by modifying polymerization terminals (active terminals) with the compound represented by the above formula.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These compounds may be used individually, or two or more of these compounds may be used in combination.

As the modified BR, a modified BR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl) [3-(trimethoxysilyl)propyl] sulfide, (trimethylsilyl)[3-(triethoxysilyl)propyl] sulfide, (trimethylsilyl)[3-(tripropoxysilyl)propyl] sulfide, (trimethylsilyl) [3-(tributoxysilyl)propyl] sulfide, (trimethylsilyl) [3-(methyldimethoxysilyl)propyl] sulfide, (trimethylsilyl) [3-(methyldiethoxysilyl)propyl] sulfide, (trimethylsilyl) [3-(methyldipropoxysilyl)propyl] sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by

a known method.

As the modified BR, for example, a tin-modified BR can also be used. As the tin-modified BR, a BR obtained by polymerizing 1,3-butadiene with a lithium initiator and then adding a tin compound to the polymerized 1,3-butadiene and in which the terminals of the modified BR molecules are bound to each other through tin-carbon bonds, is preferable.

Examples of the lithium initiator include lithium-based compounds such as alkyl lithiums, aryl lithiums, vinyl lithium, organotin lithium, and organic nitrogen lithium compounds, and lithium metal. A tin-modified BR with a high vinyl content and a low cis content can be manufactured using the lithium initiator as an initiator for the tin-modified BR.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraaryltin, and p-tributyltin styrene.

The content of tin atoms in the tin-modified BR is preferably not less than 50 ppm and more preferably not less than 60 ppm. On the other hand, the content of tin atoms is preferably not greater than 3000 ppm, more preferably not greater than 2500 ppm, and further preferably not greater than 250 ppm.

The molecular weight distribution (Mw/Mn) of the tin-modified BR is preferably not greater than 2 and more preferably not greater than 1.5.

The vinyl bond content of the tin-modified BR is preferably not less than 5% by mass and more preferably not less than 7% by mass. On the other hand, the vinyl bond content of the tin-modified BR is preferably not greater than 50% by mass and more preferably not greater than 20% by mass.

The above S-modified BRs or tin-modified BRs may be used individually, or two or more of the above S-modified BRs or tin-modified BRs may be used in combination.

As the BR, for example, products of Ube Industries, Ltd., JSR Corporation, Asahi Kasei Corporation, Zeon Corporation, etc., can be used.

(III) SBR

In the present embodiment, as the rubber component, SBR may be used together with NR as necessary. The amount of the SBR in 100 parts by mass of the rubber component in the rubber composition forming the outermost layer of the tread portion is preferably not less than 5 parts by mass, more preferably not less than 7 parts by mass, and further preferably not less than 10 parts by mass. The upper limit thereof is not particularly limited, but the amount of the SBR is preferably not greater than 45 parts by mass, more preferably not greater than 30 parts by mass, and further preferably not greater than 25 parts by mass.

The weight-average molecular weight of the SBR is, for example, greater than 100 thousand and less than 2 million. The styrene content of the SBR is preferably not less than 5% by mass and particularly preferably not less than 8% by mass. In addition, the styrene content of the SBR is preferably less than 35% by mass, more preferably less than 25% by mass, and further preferably less than 15% by mass. The vinyl bond content (1,2-bond butadiene unit content) of the SBR is, for example, greater than 5% by mass and less than 70% by mass. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR, and these SBRs may be used individually, or two or more of these SBRs may be used in combination.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

As the SBR, for example, SBRs manufactured by and available from SUMITOMO CHEMICAL COMPANY, LIMITED, JSR Corporation, Asahi Kasei Corporation, Zeon Corporation, etc., can be used. These SBRs may be used individually, or two or more of these SBRs may be used in combination.

(IV) Other Rubber Component

As another rubber component, a rubber (polymer) generally used in the production of tires, such as nitrile rubber (NBR), may be contained as necessary.

(b) Blending Materials Other Than Rubber Component

(I) Filler

In the present embodiment, the rubber composition preferably contains a filler. Specific examples of the filler include carbon black, silica, graphite, calcium carbonate, talc, alumina, clay, aluminum hydroxide, and mica. Among them, silica is preferably contained in combination with a silane coupling agent, and carbon black may be further contained as necessary.

(i) Silica

In the present embodiment, the rubber composition forming the outermost layer of the tread portion preferably contains silica. From the viewpoint of obtaining good durability, the BET specific surface area of the silica is preferably greater than 140 $m^2/g$ and more preferably greater than 160 $m^2/g$. On the other hand, from the viewpoint of obtaining good low-rolling resistance, the BET specific surface area of the silica is preferably less than 250 $m^2/g$ and more preferably less than 220 $m^2/g$. The above BET specific surface area is a value of $N_2SA$ measured by the BET method according to ASTM D3037-93.

The amount of the silica per 100 parts by mass of the rubber component in the rubber composition forming the outermost layer of the tread portion is preferably not less than 40 parts by mass, more preferably not less than 50 parts by mass, and further preferably not less than 60 parts by mass. On the other hand, the amount of the silica is preferably not greater than 100 parts by mass, more preferably not greater than 80 parts by mass, and further preferably not greater than 70 parts by mass.

Examples of the silica include dry-process silica (anhydrous silica) and wet-process silica (hydrous silica). Between them, wet-process silica is preferable for the reason that it has a higher silanol group content. In addition to the above-described silica using hydrous glass or the like as a raw material, silica using a biomass material such as rice husks as a raw material may be used.

As the silica, for example, products of Evonik Industries Ag, Rhodia, Tosoh Silica Corporation, Solvay Japan, Ltd., Tokuyama Corporation, etc., can be used.

(ii) Silane Coupling Agent

When using silica, a silane coupling agent is preferably used together. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

As the silane coupling agent, for example, products of Evonik Industries Ag, Momentive Performance Materials, Inc., Shin-Etsu Silicones, Tokyo Chemical Industry Co., Ltd., AZmax.co, Dow Coming Toray Co., Ltd., etc., can be used.

The amount of the silane coupling agent per 100 parts by mass of the silica is, for example, greater than 3 parts by mass and less than 15 parts by mass.

(iii) Carbon Black

In the present embodiment, each of the rubber composition forming the outermost layer of the tread portion and the rubber composition forming the sidewall portions preferably contains carbon black as necessary. The amount of the carbon black per 100 parts by mass of the rubber component in the rubber composition forming the outermost layer of the tread portion is preferably not less than 1 part by mass, more preferably not less than 3 parts by mass, and further preferably not less than 5 parts by mass. The upper limit thereof is not particularly limited, but the amount of the

carbon black is preferably not greater than 20 parts by mass and more preferably not greater than 15 parts by mass.

The amount of the carbon black per 100 parts by mass of the rubber component in the rubber composition forming the sidewall portions is preferably not less than 40 parts by mass, more preferably not less than 50 parts by mass, and further preferably not less than 55 parts by mass. The upper limit thereof is not particularly limited, but the amount of the carbon black is preferably not greater than 70 parts by mass and more preferably not greater than 65 parts by mass.

It is considered that when the carbon black is used, the rubber composition is firmly reinforced and it becomes easier to transmit a force. Therefore, the amount of the carbon black contained in the sidewall rubber composition is preferably larger than that in the rubber composition forming the outermost layer of the tread portion. Accordingly, it is considered that it is made easier to transmit a force from the sidewall rubber, and it is possible to make it easier to bring the tread portion into pressure contact with a road surface.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; and channel black (channel carbon black) such as EPC, MPC, and CC. These carbon blacks may be used individually, or two or more of these carbon blacks may be used in combination.

The nitrogen adsorption specific surface area ($N_2SA$) of the carbon black is, for example, greater than 30 $m^2/g$ and less than 250 $m^2/g$. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. These carbon blacks may be used individually, or two or more of these carbon blacks may be used in combination.

(iv) Other Filler

In addition to the above-described silica and carbon black, the rubber composition may contain fillers generally used in the tire industry, such as graphite, calcium carbonate, talc, alumina, clay, aluminum hydroxide, and mica. The amount of each of these fillers per 100 parts by mass of the rubber component is, for example, greater than 0.1 parts by mass and less than 200 parts by mass.

(II) Vulcanized rubber powder

As described above, the rubber composition forming the outermost layer of the tread portion contains vulcanized rubber powder as a material that functions as a cushioning material. As the vulcanized rubber powder, commercially available vulcanized rubber powder obtained by crushing used tires with a roll machine, a grinder, or the like and then sieving the crushed matter to a predetermined particle diameter may be used, but vulcanized rubber powder obtained by vulcanizing, crushing, and sieving a separately formulated rubber composition may be used as necessary. As described above, the particle size of the vulcanized rubber powder is preferably a particle size finer than 30 mesh pass and coarser than 250 mesh pass obtained through a test sieve specified in JIS Z8801-1.

As described above, containing the vulcanized rubber powder may decrease the reinforcing properties of the tire, which may lead to a decrease in the durability of the tire. Therefore, the amount of the vulcanized rubber powder per 100 parts by mass of the rubber component is, for example, preferably not less than 1 part by mass and not greater than 30 parts by mass, more preferably not less than 5 parts by mass and not greater than 25 parts by mass, and further preferably not less than 10 parts by mass and not greater than 20 parts by mass.

By setting the amount of the vulcanized rubber powder as described above, the area ratio Sr of the vulcanized rubber powder in the cross-section can be not less than 5% and not greater than 50% as described above. The area ratio Sr of the vulcanized rubber powder in the cross-section can be obtained, for example, by observing a sample cut out from the tread portion, using an SEM (scanning electron microscope) or the like.

(III) Plasticizer Component

In the rubber composition forming the outermost layer of the tread portion and the rubber composition forming the sidewall portions, a plasticizer is preferably used as necessary.

The amount of the plasticizer component per 100 parts by mass of the rubber component in the rubber composition forming the outermost layer of the tread portion is preferably not less than 25 parts by mass, more preferably not less than 45 parts by mass, and further preferably not less than 50 parts by mass. Accordingly, it is easier to disperse the vulcanized rubber powder during mixing and obtain the effect as a cushioning material, and it also becomes easier for the entire rubber composition to move, so that it can be made easier to obtain the cushioning effect in the tread portion. On the other hand, the upper limit of the amount of the plasticizer component is not particularly limited, but the amount of the plasticizer component is preferably not greater than 100 parts by mass, more preferably not greater than 70 parts by mass, and further preferably not greater than 60 parts by mass. Accordingly, when mixing the rubber, it is less likely to cause a decrease in viscosity, so that it can be made easier to disperse the vulcanized rubber powder.

Meanwhile, the amount of the plasticizer component per 100 parts by mass of the rubber component in the rubber composition forming the sidewall portions is not particularly limited, but is preferably not less than 2 parts by mass and more preferably not less than 5 parts by mass.

As used herein, the plasticizer component refers to a component that plasticizes the rubber composition, such as process oil, extender oil of the rubber component, liquid rubber, and a resin component.

(IV) Resin Component

From the viewpoint of processability (imparting adhesiveness), the rubber composition forming the outermost layer of the tread portion and the rubber composition forming the sidewall portions preferably contain a resin component as necessary. The resin component may be solid or liquid at room temperature. Specific examples of the resin component include rosin-based resins, styrene-based resins, coumarone-based resins, terpene-based resins, C5 resins, C9 resins, C5C9 resins, and acrylic-based resins, and two or more of these resins may be used in combination. The amount of the resin component per 100 parts by mass of the rubber component is preferably not less than 15 parts by mass, more preferably not less than 25 parts by mass, and further preferably not less than 30 parts by mass. On the other hand, the amount of the resin component is preferably not greater than 60 parts by mass, more preferably not greater than 55 parts by mass, and further preferably not greater than 50 parts by mass.

The rosin-based resins refer to resins that are obtained by processing pinene resin and contain rosin acid as a main component. The rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically altered rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; and $\alpha$, $\beta$-unsaturated carboxylic acids or acid anhydrides thereof such as maleic anhydride.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include styrene, $\alpha$-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS K0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of (CsHs)n and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of α-methylstyrene (AMS resin) or styrene or a copolymer of α-methylstyrene and styrene is preferable, and a copolymer of α-methylstyrene and styrene is more preferable, for the reason that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

(V) Vulcanization Activator

The rubber composition forming the outermost layer of the tread portion and the rubber composition forming the sidewall portions preferably contain a vulcanization activator as necessary. Accordingly, a strong active action is exerted on a crosslinking reaction, and the vulcanization rate is increased, so that the crosslink density and the reversion resistance can be increased. As a specific vulcanization activator, for example, Activator 73A (zinc soap mixture of aliphatic and aromatic carboxylic acids) manufactured by Struktol Company of America, etc., can be used. The amount of the vulcanization activator per 100 parts by mass of the rubber component is preferably not less than 0.1 parts by mass and not greater than 3 parts by mass, more preferably not less than 0.2 parts by mass and not greater than 2.5 parts by mass, and further preferably not less than 0.3 parts by mass and not greater than 2 parts by mass.

(VI) Antioxidant

The rubber composition forming the outermost layer of the tread portion and the rubber composition forming the sidewall portions preferably contain an antioxidant. The amount of the antioxidant per 100 parts by mass of the rubber component is, for example, greater than 1 part by mass and less than 10 parts by mass.

Examples of the antioxidant include: naphthylamine-based antioxidants such as phenyl-$\alpha$-naphthylamine; diphenylamine-based antioxidants such as octylated diphenylamine and 4,4'-bis($\alpha$,$\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

(VII) Lubricant

The rubber composition forming the outermost layer of the tread portion and the rubber composition forming the sidewall portions may contain a lubricant. As the lubricant, a lubricant based on a fatty acid derivative such as stearic acid is preferable, and specifically, as the stearic acid, for example, products of NOF Corporation, Kao Corporation, FUJIFILM Wako Pure Chemical Industries, Ltd., New Japan Chemical Co., Ltd., etc., can be used, and Struktol WB16 manufactured by Struktol Company of America, etc., can also be used. The amount of the lubricant per 100 parts by mass of the rubber component is preferably not less than 0.1 parts by mass and not greater than 3 parts by mass, more preferably not less than 0.5 parts by mass and not greater than 2.5 parts by mass, and further preferably not less than 1.0 part by mass and not greater than 2.0 parts by mass.

(VIII) Zinc Oxide

The rubber composition forming the outermost layer of the tread portion and the rubber composition forming the sidewall portions may contain zinc oxide. The amount of the zinc oxide per 100 parts by mass of the rubber component is, for example, greater than 0.5 parts by mass and less than 15 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

(IX) Wax

The rubber composition forming the outermost layer of the tread portion and the rubber composition forming the sidewall portions preferably contain a wax. The amount of the wax per 100 parts by mass of the rubber component is, for example, 0.5 to 20 parts by mass, preferably 1.0 to 15 parts by mass, and more preferably 1.5 to 10 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

(X) Crosslinking Agent and Vulcanization Accelerator

The rubber composition forming the outermost layer of the tread portion and the rubber composition forming the sidewall portions preferably contain a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

(XI) Others

In addition to the above-described components, additives generally used in the tire industry, such as fatty acid metal salts, carboxylic acid metal salts, and organic peroxides, may be further blended in the rubber composition forming the outermost layer of the tread portion and the rubber composition forming the sidewall portions. The amount of each of these additives per 100 parts by mass of the rubber component is, for example, greater than 0.1 parts by mass and less than 200 parts by mass.

(2) Production of Rubber Composition

Each rubber composition described above is produced by a general method; for example, a production method including a base kneading step of kneading a rubber component and a filler such as silica and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, higher than 50°C and lower than 200°C, and the kneading time is, for example, longer than 30 seconds and shorter than 30 minutes. In the base kneading step, in addition to the above components, blending materials that are conventionally used in the rubber industry, for example, a softener such as oil, stearic acid, zinc oxide, an antioxidant, a wax, a vulcanization accelerator, etc., may be added and kneaded as necessary.

In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be added and kneaded as necessary.

2. Production of Tire

The tire of the present invention can be produced as an unvulcanized tire through shaping on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt member as a member for strongly tightening the carcass to increase the stiffness of a tread, etc., placing bead portions as members for fixing both ends of the carcass to both side edge portions and fixing the tire

to a rim, shaping these members into a toroid shape, then attaching a tread to a center portion of the outer periphery, and attaching sidewalls on the radially outer side to form side portions.

Thereafter, a tire is obtained by heating and pressurizing the produced unvulcanized tire in a vulcanizing machine. The vulcanization step can be carried out by applying known vulcanization means. The vulcanization temperature is, for example, higher than 120°C and lower than 200°C, and the vulcanization time is, for example, longer than 5 minutes and shorter than 15 minutes.

EXAMPLES

Hereinafter, the present invention will be further specifically described by means of examples. In the following, a tread portion having a two-layer structure with a first rubber composition as a cap rubber layer and a second rubber composition as a base rubber layer was produced, and a tire having a size of 205/55R16 was manufactured.

1. Production of Rubber Compositions

Prior to production of a tire, a rubber composition for forming a tread portion and a rubber composition for forming a sidewall portion were produced.

(1) Blending Materials

First, each blending material described below was prepared.

(a) Rubber Component

(I) NR: TSR20
(II-1) BR-1: UBEPOL BR150B manufactured by Ube Industries, Ltd.
(II-2) BR-2: N103 manufactured by Asahi Kasei Chemicals Corporation (III) SBR: SBR1502 manufactured by JSR Corporation (emulsion-polymerized SBR)

(b) Blending Materials Other Than Rubber Component

(I) Carbon black: DIABLACK N220 manufactured by Mitsubishi Chemical Corporation
(II) Silica: ULTRASIL VN3 manufactured by Evonik Industries Ag
(III) Silane coupling agent: Si266 manufactured by Evonik Industries Ag (bis(3-triethoxysilylpropyl)disulfide)
(IV) Wax: OZOACE 0355 manufactured by NIPPON SEIRO CO., LTD.
(V) Zinc oxide: Zinc Oxide Type-1 manufactured by Mitsui Mining & Smelting Co., Ltd.
(VI-1) Vulcanized rubber powder-1: vulcanized rubber powder having a silica content of 40 wt% (see the next paragraph for the production method)
(VI-2) Vulcanized rubber powder-2: vulcanized rubber powder having a silica content of 10 wt% (see the next paragraph for the production method)
(VII) Vulcanization activator: Activator 73A manufactured by Struktol Company of America
(zinc soap mixture of aliphatic and aromatic carboxylic acids)
(VIII) Lubricant: Struktol WB16 manufactured by Struktol Company of America
(IV) Stearic acid: stearic acid "Camellia" manufactured by NOF Corporation
(X-1) Antioxidant-1: NOCRAC 6C manufactured by Ouchi Shinko Chemical Industrial Co., Ltd.
(N-phenyl-N'-(1,3-dimethylbutyl)-p-phenylenediamine)
(X-2) Antioxidant-2: ANTAGE RD manufactured by Kawaguchi Chemical Industry Co., Ltd.
(2,2,4-trimethyl-1,2-dihydroquinoline)
(XI) Oil: VIVATEC NC500 manufactured by H&R
(aromatic process oil)
(XII-1) Resin-1: SYLVARES SA85 manufactured by Arizona Chemical Company
(AMS resin: copolymer of $\alpha$-methylstyrene and styrene)
(XII-2) Resin-2: T-REZ OP501 manufactured by JXTG Nippon Oil & Energy Corporation
(hydrogenated DCPD-based resin)

(XII-3) Resin-3: terpene styrene resin TO125 manufactured by Yasuhara Chemical Co., Ltd.
(aromatic modified terpene resin)
(XIII) Crosslinking agent and vulcanization accelerator

Sulfur: 5%-oil sulfur manufactured by Hosoi Chemical Industry Co., Ltd.
Vulcanization accelerator-1: NOCCELER CZ-G (CBS) manufactured by Ouchi Shinko Chemical Industrial Co., Ltd.
(N-cyclohexyl-2-benzothiazolyl sulfenamide)
Vulcanization accelerator-2: NOCCELER D (DPG) manufactured by Ouchi Shinko Chemical Industrial Co., Ltd.
(1,3-diphenylguanidine)

(c) Production of Vulcanized Rubber Powder

The above-described vulcanized rubber powder was produced according to the following procedure.
First, two kinds of kneaded products were obtained by kneading the materials other than the sulfur and the vulcanization accelerators under a condition of 150°C for 5 minutes by using a Banbury mixer in accordance with the two blending formulas shown in Table 1, then adding the sulfur and the vulcanization accelerators, and kneading the mixture under a condition of 80°C for 5 minutes by using an open roll. The unit of each blending amount is parts by mass.
Next, each of the obtained kneaded products was vulcanized under a condition of 170°C for 20 minutes to obtain rubber plates. Then, each of the obtained rubber plates was roll-crushed and sieved through a 30-mesh sieve, thereby obtaining two kinds of vulcanized rubber powder (vulcanized rubber powder-1 having a silica content of 40 wt%, vulcanized rubber powder-2 having a silica content of 10 wt%).

[Table 1]

| | Vulcanized rubber powder-1 | Vulcanized rubber powder-2 |
|---|---|---|
| SBR | 50 | 50 |
| NR | 30 | 30 |
| BR | 20 | 20 |
| Carbon black | 5 | 55 |
| Silica | 82 | 18 |
| Silane coupling agent | 8.2 | 1.8 |
| Zinc oxide | 2.4 | 2.4 |
| Stearic acid | 1.5 | 1.5 |
| Sulfur | 1.5 | 1.5 |
| Vulcanization accelerator-1 | 2 | 2 |
| Vulcanization accelerator-2 | 1 | 1 |

(2) Production of Rubber Composition

A kneaded product was obtained by kneading the materials other than the sulfur and the vulcanization accelerators under a condition of 150°C for 5 minutes by using a Banbury mixer in accordance with each of blending formulas shown in Tables 2 to 5. Table 2 and Table 3 show blending formulas for a rubber composition (first rubber composition) of a cap rubber layer, Table 4 shows blending formulas for a rubber composition (second rubber composition) of a base rubber layer, and Table 5 shows blending formulas for a rubber composition of a sidewall portion. The unit of each blending amount is parts by mass.
Next, the sulfur and the vulcanization accelerators were added to the obtained kneaded product, and the mixture was kneaded under a condition of 80°C for 5 minutes by using an open roll, to obtain a rubber composition of each blending formula.

[Table 2]

| | Blending formula 1 | Blending formula 2 | Blending formula 3 | Blending formula 4 | Blending formula 5 | Blending formula 6 | Blending formula 7 | Blending formula 8 | Blending formula 9 | Blending formula 10 |
|---|---|---|---|---|---|---|---|---|---|---|
| SBR | 10 | 10 | 10 | 10 | 10 | 10 | 10 | 10 | 10 | 10 |
| NR | 45 | 45 | 45 | 45 | 45 | 45 | 45 | 45 | 45 | 45 |
| BR-1 | 15 | 15 | 15 | 15 | 15 | 15 | 15 | 15 | 15 | 15 |
| BR-2 | 30 | 30 | 30 | 30 | 30 | 30 | 30 | 30 | 30 | 30 |
| Carbon black | 5 | 5 | 5 | 5 | 5 | 5 | 5 | 5 | 5 | 5 |
| Silica | 60 | 60 | 60 | 60 | 60 | 60 | 60 | 60 | 60 | 60 |
| Silane coupling agent | 4.8 | 4.8 | 4.8 | 4.8 | 4.8 | 4.8 | 4.8 | 4.8 | 4.8 | 4.8 |
| Wax | 1.5 | 1.5 | 1.5 | 1.5 | 1.5 | 1.5 | 1.5 | 1.5 | 1.5 | 1.5 |
| Zinc oxide | 2 | 2 | 2 | 2 | 2 | 2 | 2 | 2 | 2 | 2 |
| Rubber powder-1 | | 1 | 1 | 4 | 8 | 13 | 19 | 8 | 7 | 6 |
| Rubber powder-2 | | | | | | | | | | |
| Vulcanization activator | 1.5 | 1.5 | 1.5 | 1.5 | 1.5 | 1.5 | 1.5 | 1.5 | 1.5 | 1.5 |
| Lubricant | 2 | 2 | 2 | 2 | 2 | 2 | 2 | 2 | 2 | 2 |
| Antioxidant-1 | 2 | 2 | 2 | 2 | 2 | 2 | 2 | 2 | 2 | 2 |
| Antioxidant-2 | 0.5 | 0.5 | 0.5 | 0.5 | 0.5 | 0.5 | 0.5 | 0.5 | 0.5 | 0.5 |
| Oil | 8 | 10 | 30 | 8 | 12 | 12 | 30 | 30 | 20 | 16 |
| Resin-1 | | 43 | | | | 38 | | | | |
| Resin-2 | 20 | | 2 | 20 | 25 | | 20 | 10 | 12 | 30 |
| Resin-3 | 22 | | 18 | 22 | 18 | | 15 | 10 | 8 | 14 |
| Sulfur | 1 | 1 | 1 | 1 | 1 | 1 | 1 | 1 | 1 | 1 |
| Vulcanization accelerator-1 | 2 | 2 | 2 | 2 | 2 | 2 | 2 | 2 | 2 | 2 |
| Vulcanization accelerator-2 | 1.5 | 1.5 | 1.5 | 1.5 | 1.5 | 1.5 | 1.5 | 1.5 | 1.5 | 1.5 |

[Table 3]

| | Blending formula 11 | Blending formula 12 | Blending formula 13 | Blending formula 14 | Blending formula 15 | Blending formula 16 | Blending formula 17 | Blending formula 18 | Blending formula 19 |
|---|---|---|---|---|---|---|---|---|---|
| SBR | 10 | 10 | 10 | 10 | 10 | 10 | 10 | 10 | 10 |
| NR | 45 | 45 | 45 | 45 | 45 | 45 | 45 | 45 | 45 |
| BR-1 | 15 | 15 | 15 | 15 | 15 | 15 | 15 | 15 | 15 |
| BR-2 | 30 | 30 | 30 | 30 | 30 | 30 | 30 | 30 | 30 |

(continued)

| | Blending formula 11 | Blending formula 12 | Blending formula 13 | Blending formula 14 | Blending formula 15 | Blending formula 16 | Blending formula 17 | Blending formula 18 | Blending formula 19 |
|---|---|---|---|---|---|---|---|---|---|
| Carbon black | 5 | 5 | 5 | 5 | 5 | 5 | 5 | 5 | 5 |
| Silica | 60 | 60 | 60 | 60 | 60 | 60 | 60 | 60 | 60 |
| Silane coupling agent | 4.8 | 4.8 | 4.8 | 4.8 | 4.8 | 4.8 | 4.8 | 4.8 | 4.8 |
| Wax | 1.5 | 1.5 | 1.5 | 1.5 | 1.5 | 1.5 | 1.5 | 1.5 | 1.5 |
| Zinc oxide | 2 | 2 | 2 | 2 | 2 | 2 | 2 | 2 | 2 |
| Rubber powder-1 | 7 | 16 | 12 | 10 | 16 | 16 | 22 | | |
| Rubber powder-2 | | | | | | | | 22 | 42 |
| Vulcanization activator | 1.5 | 1.5 | 1.5 | 1.5 | 1.5 | 1.5 | 1.5 | 1.5 | 1.5 |
| Lubricant | 2 | 2 | 2 | 2 | 2 | 2 | 2 | 2 | 2 |
| Antioxidant-1 | 2 | 2 | 2 | 2 | 2 | 2 | 2 | 2 | 2 |
| Antioxidant-2 | 0.5 | 0.5 | 0.5 | 0.5 | 0.5 | 0.5 | 0.5 | 0.5 | 0.5 |
| Oil | 12 | 30 | 30 | 20 | 20 | 20 | 20 | 20 | 20 |
| Resin-1 | | | | | | | | | |
| Resin-2 | 20 | 22 | 15 | 16 | 15 | 10 | 10 | 10 | 10 |
| Resin-3 | | 15 | 18 | 6 | 13 | 8 | 8 | 8 | 8 |
| Sulfur | 1 | 1 | 1 | 1 | 1 | 1 | 1 | 1 | 1 |
| Vulcanization accelerator-1 | 2 | 2 | 2 | 2 | 2 | 2 | 2 | 2 | 2 |
| Vulcanization accelerator-2 | 1.5 | 1.5 | 1.5 | 1.5 | 1.5 | 1.5 | 1.5 | 1.5 | 1.5 |

[Table 4]

| | Blending formula 20 | Blending formula 21 |
|---|---|---|
| NR | 50 | 50 |
| BR-1 | 50 | 50 |
| Carbon black | 70 | 70 |
| Wax | 1.5 | 1.5 |
| Stearic acid | 2.0 | 2.0 |
| Zinc oxide | 2.0 | 2.0 |
| Vulcanized rubber powder-1 | | 2.2 |
| Antioxidant-1 | 1 | 1 |
| Antioxidant-2 | 1 | 1 |
| Oil | 15 | 15 |

(continued)

| | Blending formula 20 | Blending formula 21 |
|---|---|---|
| Sulfur | 2 | 2 |
| Vulcanization accelerator-1 | 50 | 50 |

[Table 5]

| | Blending formula 22 | Blending formula 23 | Blending formula 24 |
|---|---|---|---|
| SBR | 20 | | |
| NR | 40 | 40 | 50 |
| BR-1 | 40 | 60 | 50 |
| Carbon black | 60 | 70 | 70 |
| Wax | 1.5 | 1.5 | 1.5 |
| Stearic acid | 2.0 | 2.0 | 2.0 |
| Zinc oxide | 2.0 | 2.0 | 2.0 |
| Antioxidant-1 | 1.2 | 1.2 | 1.2 |
| Antioxidant-2 | 1.2 | 1.2 | 1.2 |
| Oil | 10 | 15 | 15 |
| Sulfur | 1.5 | 1.5 | 1.5 |
| Vulcanization accelerator-1 | 1.3 | 1.3 | 1.3 |

2. Production of Tire

The rubber compositions of blending formula 1 to blending formula 19 shown in Table 2 and Table 3 and the rubber compositions of blending formula 20 and blending formula 21 shown in Table 4 were extruded as cap rubber layers and base rubber layers into predetermined shapes. Then, the obtained cap rubber layers and base rubber layers were combined as shown in Table 6 to Table 8 to produce tread portions having a two-layer structure. In addition, the rubber compositions of blending formula 22 to blending formula 24 shown in Table 5 were extruded into a predetermined shape to obtain sidewall portions.

Then, the tread portions and the sidewall portions were attached together with other tire members to form unvulcanized tires, and the unvulcanized tires were press-vulcanized under a condition of 170°C for 10 minutes to produce test tires of Comparative Example 1a to Comparative Example 5a, Example 6 and Comparative Example 1 to Comparative Example 14.

3. Calculation of Parameters

Next, each of the following parameters was obtained for each of the obtained test tires.

(1) Area Ratio of Vulcanized Rubber Powder

First, an observation sample was cut out from each of the cap rubber layer and the base rubber layer of each test tire such that a surface parallel to the tread surface became an observation cross-section.

Next, the observation cross-section of the sample was imaged by using a scanning electron microscope (Teneo manufactured by Thermo Fisher) at an acceleration voltage of 15 kV to obtain an electron microscope image at a magnification of 50 times.

Next, the area of the domain corresponding to the rubber powder was calculated in a range of 2.54 mm × 1.69 mm of the obtained electron microscope image, and the ratio of the area of the domain to the area of the entire cross-section was calculated. This was performed in three visual fields per sample, and the average value of the calculated ratios was regarded as the area ratio of the vulcanized rubber powder.

The results are shown in Table 6 to Table 8. For the test tires for which the same blending formula was used, the same measurement was performed on each tire, and the obtained results were averaged again to obtain the area ratio of the vulcanized rubber powder for each blending formula.

(2) Loss Tangent

A rubber test piece for measurement was prepared by cutting out from the cap rubber layer of each test tire in a length of 20 mm × a width of 4 mm × a thickness of 2 mm such that the tire circumferential direction was the direction of the long side. For each rubber test piece, a loss tangent (0°C tanδ) was measured, using EPLEXOR series manufactured by NETZSCH-Gerätebau GmbH, under the conditions of 0°C, a frequency of 10 Hz, an initial strain of 5%, and a dynamic strain rate of 1% with deformation mode: tension.

The results are shown in Table 6 to Table 8. For the test tires for which the same blending formula was used, the same measurement was performed on each tire, and the obtained results were averaged to obtain 0°C tanδ for each blending formula.

(3) Thickness at Sidewall Portion

The sidewall portion of each test tire was cut, and the thickness G (mm) of the rubber layer in the cut plane was measured using calipers. The results are shown in Table 6 to Table 8.

4. Performance Evaluation Test

First, each test tire was fitted to a rim, and then thermally treated in an oven at 80°C for 2 weeks to harden the tread rubber. Then, the respective test tires were mounted to all the wheels of vehicles (front wheel drive vehicles produced in Japan and having an engine displacement of 2000 cc), and filled with air such that the internal pressure of the front wheels was 230 kPa and the internal pressure of the rear wheels was 220 kPa. Then, each vehicle was caused to run at a speed of 100 km/h on a test course having a dry road surface and repeatedly run over a curbstone, and the driver made a sensory inspection on a 5 point scale for the magnitude of the impact at that time, thereby evaluating ride comfort.

In the evaluation, the scores by 20 drivers were summed up, and indexed with the total score in Comparative Example 1 as 100, and the reciprocal of the obtained index was evaluated. The results are shown in Table 6 to Table 8. A higher value indicates that the cushioning performance is better and the ride comfort is better.

Ride comfort = [(evaluation score of Comparative Example 1)/(evaluation score of test time)] × 100

[Table 6]

| | | Comparative Example | | | | | Example | |
|---|---|---|---|---|---|---|---|---|
| (Comparative) Example | | la | 2a | 3a | 4a | 5a | 6 | 7 |
| [Combination of blending formulas for rubber compositions] | | | | | | | | |
| Tread portion | Cap rubber layer | Blending formula 15 | Blending formula 16 | Blending formula 17 | Blending formula 18 | Blending formula 18 | Blending formula 18 | Blending formula 19 |
| | Base rubber layer | Blending formula 20 | Blending formula 20 | Blending formula 20 | Blending formula 21 | Blending formula 21 | Blending formula 21 | Blending formula 21 |
| Sidewall portion | | Blending formula 22 | Blending formula 22 | Blending formula 22 | Blending formula 22 | Blending formula 23 | Blending formula 24 | Blending formula 24 |

(continued)

| [Parameter] | | | | | | | | |
|---|---|---|---|---|---|---|---|---|
| Cap rubber layer | Area ratio Sr (Sout) (%) of vulcanized rubber powder | 8 | 8 | 11 | 11 | 11 | 11 | 21 |
| | 0°C tanδ | 0.22 | 0.20 | 0.20 | 0.20 | 0.20 | 0.20 | 0.20 |
| Thickness G (mm) of sidewall portion | | 10 | 10 | 10 | 10 | 10 | 10 | 10 |
| Sr/G | | 0.8 | 0.8 | 1.0 | 1.0 | 1.0 | 1.0 | 2.1 |
| Vulcanized rubber powder area ratio Sin (%) of base rubber layer | | - | - | - | 1 | 1 | 1 | 1 |
| Sout-Sin (%) | | - | - | - | 10 | 10 | 10 | 20 |
| [Evaluation] | | | | | | | | |
| Ride comfort | | | 115 | 121 | 125 | 128 | 133 | 137 |

[Table 7]

| Comparative Example | | 1 | 2 | 3 | 4 | 5 | 6 | 7 |
|---|---|---|---|---|---|---|---|---|
| [Combination of blending formulas for rubber compositions] | | | | | | | | |
| Tread portion | Cap rubber layer | Blending formula 1 | Blending formula 2 | Blending formula 3 | Blending formula 4 | Blending formula 5 | Blending formula 6 | Blending formula 7 |
| | Base rubber layer | Blending formula 20 | Blending formula 20 | Blending formula 20 | Blending formula 20 | Blending formula 20 | Blending formula 20 | Blending formula 20 |
| Sidewall portion | | Blending formula 22 | Blending formula 22 | Blending formula 22 | Blending formula 22 | Blending formula 22 | Blending formula 22 | Blending formula 22 |
| [Parameter] | | | | | | | | |
| Cap rubber layer | Area ratio Sr (Sout) (%) of vulcanized rubber powder | 0 | 0.2 | 0.2 | 3 | 4 | 5 | 9 |
| | 0°C tanδ | 0.25 | 0.25 | 0.22 | 0.25 | 0.26 | 0.24 | 0.24 |
| Thickness G (mm) of sidewall portion | | 0.5 | 0.9 | 0.9 | 12 | 0.8 | 12 | 0.5 |
| Sr/G | | 0 | 0.2 | 0.2 | 0.25 | 5 | 0.41 | 18 |
| Vulcanized rubber powder area ratio Sin (%) of base rubber laver | | | | | | | | |
| Sout-Sin (%) | | - | - | - | - | - | - | - |
| [Evaluation] | | | | | | | | |
| Ride comfort | | 100 | 100 | 101 | 102 | 102 | 105 | 105 |

[Table 8]

| Comparative Example | | 8 | 9 | 10 | 11 | 12 | 13 | 14 |
|---|---|---|---|---|---|---|---|---|
| [Combination of blending formulas for rubber compositions] | | | | | | | | |
| Tread portion | Cap rubber layer | Blending formula 8 | Blending formula 9 | Blending formula 10 | Blending formula 11 | Blending formula 12 | Blending formula 13 | Blending formula 14 |
| | Base rubber layer | Blending formula 20 | Blending formula 20 | Blending formula 20 | Blending formula 20 | Blending formula 20 | Blending formula 20 | Blending formula 20 |
| Sidewall portion | | Blending formula 22 | Blending formula 22 | Blending formula 22 | Blending formula 22 | Blending formula 22 | Blending formula 22 | Blending formula 22 |
| [Parameter] | | | | | | | | |
| Cap rubber layer | Area ratio Sr (Sout) (%) of vulcanized rubber powder | 4 | 4 | 4 | 3 | 8 | 6 | 5 |
| | 0°C tanδ | 0.22 | 0.22 | 0.25 | 0.22 | 0.25 | 0.23 | 0.23 |
| Thickness G (mm) of sidewall portion | | 20 | 0.5 | 10 | 2 | 5 | 0.6 | 15 |
| Sr/G | | 0.2 | 8 | 0.4 | 1.5 | 1.6 | 10 | 0.33 |
| Vulcanized rubber powder area ratio Sin (%) of base rubber layer | | - | - | - | - | - | - | - |
| Sout-Sin (%) | | - | - | - | - | - | - | - |
| [Evaluation] | | | | | | | | |
| Ride comfort | | 104 | 104 | 105 | 108 | 109 | 108 | 108 |

From the results shown in Table 6 to Table 8, it is found that in the case where the outermost layer of the tread portion is formed by using a rubber composition, which contains vulcanized rubber powder produced by crushing a vulcanized rubber and has a loss tangent (0°C tanδ) of less than 0.23 as measured under conditions of 0°C, a frequency of 10 Hz, an initial strain of 5%, and a dynamic strain rate of 1% with deformation mode: tension, such that an area ratio Sr (%) of the vulcanized rubber powder in a cross-section of the outermost layer of the tread portion is not less than 5% and not greater than 50%, each sidewall portion is formed such that a thickness G (mm) thereof is not less than 1.0 mm, and Sr/G is greater than 0.5, it is possible to provide a pneumatic tire having a sufficiently reduced feeling of pushing up even after a tread rubber becomes hardened, and having sufficiently improved ride comfort.

Although the present invention has been described based on the embodiment, the present invention is not limited to the above embodiment. Various modifications of the above embodiment can be made within the scope of the appended claims.

## Claims

1. A pneumatic tire comprising a tread portion and sidewall portions, wherein an outermost layer of the tread portion is formed by using a rubber composition, which contains vulcanized rubber powder and has a loss tangent (0°C tanδ) of less than 0.23 as measured under conditions of 0°C, a frequency of 10 Hz, an initial strain of 5%, and a dynamic strain rate of 1% with deformation mode: tension, such that an area ratio Sr (%) of the vulcanized rubber powder in a cross-section of the outermost layer of the tread portion is not less than 5% and not greater than 50%,

each sidewall portion is formed such that a thickness G (mm) thereof is not less than 1.0 mm, and the following formula 1 is satisfied,

$$Sr/G > 0.5 \quad \text{(formula 1)},$$

**characterized in that**

a rubber component of the rubber composition forming the outermost layer of the tread portion contains natural rubber,
a rubber component of the rubber composition forming the sidewall portions contains natural rubber, and
an amount of the natural rubber contained in 100 parts by mass of the rubber component in the rubber composition forming the sidewall portions is larger than an amount of the natural rubber contained in 100 parts by mass of the rubber component in the rubber composition forming the outermost layer of the tread portion.

**2.** The pneumatic tire according to claim 1, wherein the 0°C tanδ is less than 0.21.

**3.** The pneumatic tire according to claim 2, wherein the area ratio Sr (%) of the vulcanized rubber powder in the cross-section of the outermost layer of the tread portion is greater than 10% and less than 50%.

**4.** The pneumatic tire according to claim 3, wherein the area ratio Sr (%) of the vulcanized rubber powder in the cross-section of the outermost layer of the tread portion is greater than 15% and less than 30%.

**5.** The pneumatic tire according to any one of claims 1 to 4, wherein the following formula 2 is satisfied,

$$Sr/G \geq 0.7 \quad \text{(formula 2)}.$$

**6.** The pneumatic tire according to claim 5, wherein the following formula 3 is satisfied,

$$Sr/G \geq 0.9 \quad \text{(formula 3)}.$$

**7.** The pneumatic tire according to any one of claims 1 to 6, wherein the rubber composition forming the outermost layer of the tread portion and the vulcanized rubber powder contain silica.

**8.** The pneumatic tire according to any one of claims 1 to 7, wherein

a rubber component of the rubber composition forming the outermost layer of the tread portion contains butadiene rubber,
a rubber component of a rubber composition forming the sidewall portions contains butadiene rubber, and
an amount of the butadiene rubber contained in 100 parts by mass of the rubber component in the rubber composition forming the sidewall portions is larger than an amount of the butadiene rubber contained in 100 parts by mass of the rubber component in the rubber composition forming the outermost layer of the tread portion.

**9.** The pneumatic tire according to any one of claims 1 to 8, wherein

the tread portion is composed of two or more rubber layers, and
a blending formula of a rubber composition forming a cap rubber layer which is the outermost layer is different from that of a rubber composition forming the other rubber layer(s) including a base rubber layer which is an innermost layer.

**10.** The pneumatic tire according to claim 9, wherein the rubber layer(s) other than the cap rubber layer contain the vulcanized rubber powder.

**11.** The pneumatic tire according to claim 10, wherein

an area ratio Sout (%) of the vulcanized rubber powder in the cap rubber layer is higher than an area ratio Sin (%) of the vulcanized rubber powder in the base rubber layer, and
the area ratio Sin (%) of the vulcanized rubber powder in the base rubber layer is greater than 1%.

**12.** The pneumatic tire according to any one of claims 1 to 11, wherein the vulcanized rubber powder is vulcanized rubber powder having a particle size finer than 30 mesh pass obtained through a test sieve specified in JIS Z8801-1.

**Patentansprüche**

**1.** Luftreifen, umfassend einen Laufstreifenabschnitt und Seitenwandabschnitte, wobei

eine äußerste Schicht des Laufstreifenabschnitts unter Verwendung einer Kautschukzusammensetzung gebildet ist, die vulkanisiertes Kautschukpulver enthält und einen Verlusttangens (0°C tanδ) von weniger als 0,23 aufweist, wie unter Bedingungen von 0°C, einer Frequenz von 10 Hz, einer Anfangsdehnung von 5% und einer dynamischen Dehnungsrate von 1% bei Verformungsmodus: Zug gemessen, so dass ein Flächenanteil Sr (%) des vulkanisierten Kautschukpulvers in einem Querschnitt der äußersten Schicht des Laufstreifenabschnitts nicht kleiner als 5% und nicht größer als 50% ist,
jeder Seitenwandabschnitt so gebildet ist, dass eine Dicke G (mm) desselben nicht kleiner als 1,0 mm ist, und die folgende Formel 1 erfüllt ist,

$$Sr/G > 0,5 \quad \text{(Formel 1)},$$

**dadurch gekennzeichnet, dass**

eine Kautschukkomponente der Kautschukzusammensetzung, welche die äußerste Schicht des Laufstreifenabschnitts bildet, Naturkautschuk enthält,
eine Kautschukkomponente der Kautschukzusammensetzung, welche die Seitenwandabschnitte bildet, Naturkautschuk enthält, und
eine Menge des Naturkautschuks, der in 100 Massenteilen der Kautschukkomponente in der Kautschukzusammensetzung, welche die Seitenwandabschnitte bildet, enthalten ist, größer ist als eine Menge des Naturkautschuks, der in 100 Massenteilen der Kautschukkomponente in der Kautschukzusammensetzung, welche die äußerste Schicht des Laufstreifenabschnitts bildet, enthalten ist.

**2.** Luftreifen nach Anspruch 1, wobei der 0°C tanδ kleiner als 0,21 ist.

**3.** Luftreifen nach Anspruch 2, wobei der Flächenanteil Sr (%) des vulkanisierten Kautschukpulvers in dem Querschnitt der äußersten Schicht des Laufstreifenabschnitts größer als 10% und kleiner als 50% ist.

**4.** Luftreifen nach Anspruch 3, wobei der Flächenanteil Sr (%) des vulkanisieren Kautschukpulvers in dem Querschnitt der äußersten Schicht des Laufstreifenabschnitts größer als 15% und kleiner als 30% ist.

**5.** Luftreifen nach einem der Ansprüche 1 bis 4, wobei die folgende Formel 2 erfüllt ist,

$$Sr/G \geq 0,7 \quad \text{(Formel 2)}.$$

**6.** Luftreifen nach Anspruch 5, wobei die folgende Formel 3 erfüllt ist,

$$Sr/G \geq 0,9 \quad \text{(Formel 3)}.$$

**7.** Luftreifen nach einem der Ansprüche 1 bis 6, wobei die Kautschukzusammensetzung, welche die äußerste Schicht des Laufstreifenabschnitts bildet, und das vulkanisierte Kautschukpulver Siliziumdioxid enthalten.

**8.** Luftreifen nach einem der Ansprüche 1 bis 7, wobei

eine Kautschukkomponente der Kautschukzusammensetzung, welche die äußerste Schicht des Laufstreifenabschnitts bildet, Butadienkautschuk enthält,
eine Kautschukkomponente einer Kautschukzusammensetzung, welche die Seitenwandabschnitte bildet, Butadienkautschuk enthält, und
eine Menge des Butadienkautschuks, der in 100 Massenteilen der Kautschukkomponente in der Kautschukzusammensetzung, welche die Seitenwandabschnitte bildet, enthalten ist, größer ist als eine Menge des Butadienkautschuks, der in 100 Massenteilen der Kautschukkomponente in der Kautschukzusammensetzung enthalten ist, welche die äußerste Schicht des Laufstreifenabschnitts bildet.

**9.** Luftreifen nach einem der Ansprüche 1 bis 8, wobei

der Laufstreifenabschnitt mit zwei oder mehr Kautschukschichten aufgebaut ist, und
eine Mischungsformulierung einer Kautschukzusammensetzung, die eine Deckkautschukschicht bildet, welche die äußerste Schicht ist, verschieden ist von derjenigen einer Kautschukzusammensetzung, welche die andere(n) Kautschukschicht(en) bildet, einschließlich einer Basiskautschukschicht, die eine innerste Schicht ist.

**10.** Luftreifen nach Anspruch 9, wobei die Kautschukschicht(en) außer der Deckkautschukschicht das vulkanisierte Kautschukpulver enthalten.

**11.** Luftreifen nach Anspruch 10, wobei

ein Flächenanteil Sout (%) des vulkanisierten Kautschukpulvers in der Deckkautschukschicht höher ist als ein Flächenanteil Sin (%) des vulkanisierten Kautschukpulvers in der Basiskautschukschicht, und
der Flächenanteil Sin (%) des vulkanisierten Kautschukpulvers in der Basiskautschukschicht größer ist als 1%.

**12.** Luftreifen nach einem der Ansprüche 1 bis 11, wobei das vulkanisierte Kautschukpulver vulkanisiertes Kautschukpulver ist, das eine Partikelgröße aufweist, die feiner ist als 30 Mesh Durchgang, erhalten durch ein in JIS Z8801-1 angegebenes Testsieb.

## Revendications

**1.** Bandage pneumatique comprenant une portion formant bande de roulement et des portions formant parois latérales, dans lequel une couche la plus à l'extérieur de la portion formant bande de roulement est constituée en utilisant une composition de caoutchouc qui contient une poudre de caoutchouc vulcanisé et a une tangente de perte (0°C tanδ) de moins de 0,23 telle que mesurée dans les conditions suivantes : 0 °C, fréquence de 10 Hz, contrainte initiale de 5 %, et taux de contrainte dynamique de 1 % avec un mode de déformation en tension, de telle sorte qu'un rapport surfacique Sr (%) de la poudre de caoutchouc vulcanisé dans une section transversale de la couche la plus à l'extérieur de la portion formant bande de roulement n'est pas inférieur à 5 % et n'est pas supérieur à 50 %

chaque portion formant paroi latérale est constituée de telle sorte qu'une épaisseur G (mm) de celle-ci n'est pas inférieure à 1,0 mm, et
la formule 1 suivante est satisfaite :

$$Sr/G > 0,5 \qquad \text{(formule 1)},$$

**caractérisé en ce que**

un composant de caoutchouc de la composition de caoutchouc constituant la couche la plus à l'extérieur de la portion formant bande de roulement contient un caoutchouc naturel,
un composant de caoutchouc de la composition de caoutchouc constituant les portions formant parois latérales contient un caoutchouc naturel, et
une quantité du caoutchouc naturel contenu dans 100 parts en masse du composant de caoutchouc dans la composition de caoutchouc constituant les portions formant parois latérales est plus grande qu'une quantité du caoutchouc naturel contenu dans 100 parts en masse du composant de caoutchouc dans la composition de caoutchouc constituant la couche la plus à l'extérieur de la portion formant bande de roulement.

2. Bandage pneumatique selon la revendication 1, dans lequel la tangente de perte 0°C tanδ est inférieure à 0,21.

3. Bandage pneumatique selon la revendication 2, dans lequel le rapport surfacique Sr (%) de la poudre de caoutchouc vulcanisé dans la section transversale de la couche la plus à l'extérieur de la portion formant bande de roulement est supérieur à 10 % et est inférieur à 50 %.

4. Bandage pneumatique selon la revendication 3, dans lequel le rapport surfacique Sr (%) de la poudre de caoutchouc vulcanisé dans la section transversale de la couche la plus à l'extérieur de la portion formant bande de roulement est supérieur à 15 % et est inférieur à 30 %.

5. Bandage pneumatique selon l'une quelconque des revendications 1 à 4, dans lequel la formule 2 suivante est satisfaite :

$$Sr/G \geq 0,7 \qquad \text{(formule 2).}$$

6. Bandage pneumatique selon la revendication 5, dans lequel la formule 3 suivante est satisfaite :

$$Sr/G \geq 0,9 \qquad \text{(formule 3).}$$

7. Bandage pneumatique selon l'une quelconque des revendications 1 à 6, dans lequel la composition de caoutchouc constituant la couche la plus à l'extérieur de la portion formant bande de roulement et la poudre de caoutchouc vulcanisé contiennent une silice.

8. Bandage pneumatique selon l'une quelconque des revendications 1 à 7, dans lequel

un composant de caoutchouc de la composition de caoutchouc constituant la couche la plus à l'extérieur de la portion formant bande de roulement contient un caoutchouc butadiène,
un composant de caoutchouc d'une composition de caoutchouc constituant les portions formant parois latérales contient un caoutchouc butadiène, et
une quantité du caoutchouc butadiène contenu dans 100 parts en masse du composant de caoutchouc dans la composition de caoutchouc constituant les portions formant parois latérales est plus grande qu'une quantité du caoutchouc butadiène contenu dans 100 parts en masse du composant de caoutchouc dans la composition de caoutchouc constituant la couche la plus à l'extérieur de la portion formant bande de roulement.

9. Bandage pneumatique selon l'une quelconque des revendications 1 à 8, dans lequel

la portion formant bande de roulement est composée de deux ou plusieurs couches de caoutchouc, et
une formule de mélange d'une composition de caoutchouc constituant une couche de caoutchouc de chape qui est la couche la plus à l'extérieur est différente de celle d'une composition de caoutchouc constituant l'autre/les autres couche(s) de caoutchouc incluant une couche de caoutchouc de base qui est une couche la plus à l'intérieur.

10. Bandage pneumatique selon la revendication 9, dans lequel la/les couche(s) de caoutchouc autre(s) que la couche de caoutchouc de chape contient/contiennent la poudre de caoutchouc vulcanisé.

11. Bandage pneumatique selon la revendication 10, dans laquelle

un rapport surfacique Sout (%) de la poudre de caoutchouc vulcanisé dans la couche de caoutchouc de chape est plus élevé qu'un rapport surfacique Sin (%) de la poudre de caoutchouc vulcanisé dans la couche de caoutchouc de base, et
le rapport surfacique Sin (%) de la poudre de caoutchouc vulcanisé dans la couche de caoutchouc de base est supérieur à 1 %.

12. Bandage pneumatique selon l'une quelconque des revendications 1 à 11, dans lequel la poudre de caoutchouc vulcanisé est une poudre de caoutchouc vulcanisé ayant une taille particulaire plus fine que 30 mesh, obtenue via un tamis d'essai spécifié dans la norme industrielle japonaise JIS Z8801-1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014113957 A
- JP 2019116197 A
- US 2016152805 A1
- JP 6881627 B
- US 4414370 A
- JP 59006207 A
- JP H558005 B
- JP H1313522 A
- US 5010166 A